# FASCICULE DE BREVET EUROPEEN

(11) **EP 0 550 440 B1**
(45) Date de publication et mention de la délivrance du brevet: **17.01.1996**
(21) Numéro de dépôt: 91906071.5
(22) Date de dépôt: 08.03.1991
(51) Int. Cl.: G01F 23/30, G01F 23/00, G01F 23/04, G01F 23/28, G01F 23/68

(54) **DISPOSITIF AUTOMATISE DE MESURE VOLUMETRIQUE DE CONTAINER ET CONTAINER EQUIPE D'UN TEL DISPOSITIF**
AUTOMATISCHE VOLUMENMESSVORRICHTUNG FÜR BEHÄLTER UND DAMIT AUSGERÜSTETER BEHÄLTER
AUTOMATED CONTAINER VOLUME MEASURING DEVICE AND CONTAINER EQUIPPED THEREWITH

(43) Date de publication de la demande: 14.07.1993
(73) Titulaire: HUGONNET, F-21850 Saint Apollinaire (FR)
(72) Inventeur: CANAUT, Jean-Louis, F-21380 Asnières-les-Dijon (FR); GLAUDA, Jean-Marie, F-21850 Saint-Apollinaire (FR)
(74) Mandataire: Bourgognon, Jean-Marie
(86) Numéro de dépôt international: FR9100188
(87) Numéro de publication internationale: WO9215846

(56) Documents cités:
- EP-A- 0 278 678
- EP-A- 0 303 221
- DE-A- 3 428 132
- US-A- 4 853 694
- US-A- 4 952 873
- US-A- 4 966 008

## Description

La présente invention concerne un dispositif automatisé de mesure volumétrique de container et le container équipé d'un tel dispositif.

Il est connu dans la technique antérieure de mesurer le volume d'un container à l'aide d'une règle de jauge millimétrique, par exemple, à lecture directe suspendue à l'une des parois du container par un téton d'accrochage. Ceci est particulièrement utile dans les containers à lait qui permettent ainsi par lecture de la règle de jauge de connaître le volume du liquide prélevé ou le volume du liquide restant dans la cuve. Une telle opération n'est rendue possible que par une opération de préjaugeable permettant d'effectuer une correspondance entre le volume contenu par la cuve et les graduations de la règle de jauge.

Un tel dispositif présente l'inconvénient d'erreurs de mesure dues à la difficulté de lecture de la règle par l'opérateur et d'autre part au fait que le liquide peut être animé d'un mouvement oscillatoire dans la cuve, ce mouvement pouvant, par exemple, résulter d'un agitateur.

Au DE-A-34 28 132, on décrit un dispositif de mesure du niveau du liquide dans une cuve comprenant des moyens de mesure de la distance entre un flotteur et un émetteur récepteur et un élément de guidage du flotteur destiné à le maintenir dans l'alignement de l'émetteur récepteur.

Au US-A-4 966 008, on décrit le montage d'un détecteur de cubes de glace dans une machine de fabrication de glaces. Le détecteur comprend une pièce en forme de L accrochée à un crochet et pouvant en être décrochée, une branche du L empêchant que la pièce ne passe à travers une fente.

Au US-A-4 952 873, on décrit un transducteur utilisant un guide d'onde en torsion ayant un élément magnétique qui est réglable en position le long d'un guide d'onde quand une impulsion de courant électrique passe le long du guide d'onde. L'onde est réfléchie vers une extrémité de montage du guide d'onde où se trouve un capteur qui détecte le signal et le transforme en un signal électrique de sortie.

Au EP-A-0 278 678, on décrit un procédé et une installation destinés à éliminer sensiblement les imprécisions de mesure dans un système de détection de fuite d'une cuve de stockage.

Au EP-A-0 303 221, on décrit un indicateur du niveau du liquide utilisant un faisceau laser.

Un premier but de l'invention est donc de proposer les moyens permettant de substituer à la règle de jauge traditionnelle un dispositif palliant les inconvénients de l'art antérieur.

Ce but est atteint par les dispositions prévues à la revendication 1, les sous-revendications proposant des perfectionnements.

Selon une autre particularité, le moyen de suspension est constitué d'un flanc découpé et plié pour former une équerre à face plane, renforcée sur le côté par des entretoises triangulaires, une des faces de l'équerre comportant un orifice oblong de suspension sur le téton de fixation et la face perpendiculaire un trou de passage de la tige de guidage et d'un moyen de fixation de l'émetteur récepteur. Ce même moyen de suspension peut être réalisé identiquement par un autre procédé, tel que moulage par exemple.

Selon une autre particularité, le flotteur comporte une cible permettant la réflexion d'un faisceau d'onde incidente émise par le dispositif émetteur pour être détectée par un récepteur pour déterminer ensuite le temps mis par le faisceau incident pour se réfléchir.

Selon une autre particularité, l'onde est optique et le capteur optique.

Selon une autre particularité, l'onde est ultrasonore et le capteur est un capteur à ultrasons.

Selon une autre particularité, le flotteur comporte noyés dans la masse des aimants permanents, l'élément de guidage est constitué d'un tube creux a l'intérieur duquel se trouve une tige coaxiale conductrice permettant de véhiculer une onde électrique qui, au passage devant les aimants, provoque par magnétostriction une onde de torsion se propageant dans les deux directions le long de la tige pour être détectée au niveau du capteur par un capteur de torsion pour déterminer ensuite le temps mis par l'onde pour revenir, l'onde de torsion en direction de l'extrémité opposée à l'émetteur étant amortie pour éviter des réflexions parasites.

Selon une autre particularité, le dispositif comporte un circuit électronique permettant, à partir de la mesure du temps, d'élaborer un signal représentatif de la distance séparant l'émetteur récepteur du capteur.

Selon une autre particularité, le signal représentatif de la distance est fourni à un calculateur qui détermine le volume du liquide présent dans le container et permet l'affichage de l'apport ou de retrait de liquide effectué.

Selon une autre particularité, le flotteur a une base plus large qui se prolonge par une forme tronconique.

Selon une autre particularité, le calculateur échantillonne plusieurs mesures dans le temps et retient pour valeur de niveau celle qui correspond soit à plusieurs valeurs successives identiques, soit à une valeur moyenne calculée.

Selon une autre particularité, la tige de guidage comporte une graduation référencée à partir du point d'accrochage pour permettre une lecture visuelle de hauteur du liquide par exemple en cas de panne du système automatique.

D'autres particularités et avantages de la présente invention apparaîtront plus clairement à la lecture de la description ci-après faite en référence aux dessins annexés dans lesquels :

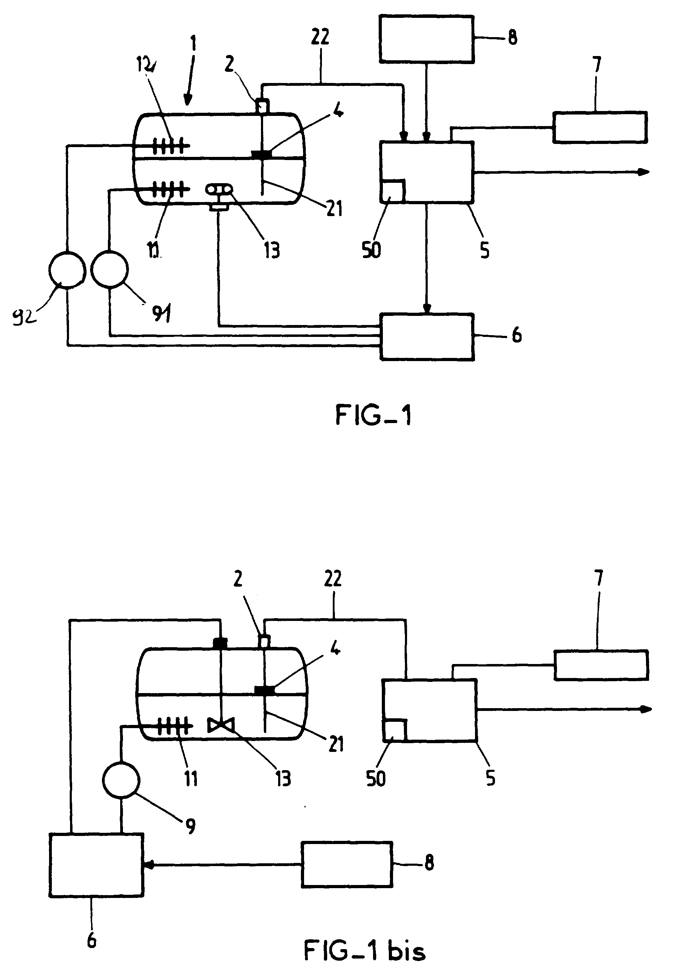

- la figure 1 représente une vue schématique d'une cuve équipée selon l'invention ;
- la figure 1 bis représente une variante de l'invention où l'unité centrale est dissociée de l'unité de commande de process ;
- la figure 2 représente une vue schématique du dispositif de mesure de niveau ;
- la figure 3 représente une vue en perspective du dispositif d'accrochage du dispositif de mesure ;
- la figure 4 représente une vue en coupe du flotteur ;
- la figure 5 représente le schéma de principe du système hydraulique permettant de jauger la cuve ;
- la figure 6 représente le dispositif de mesure de niveau de l'art antérieur.

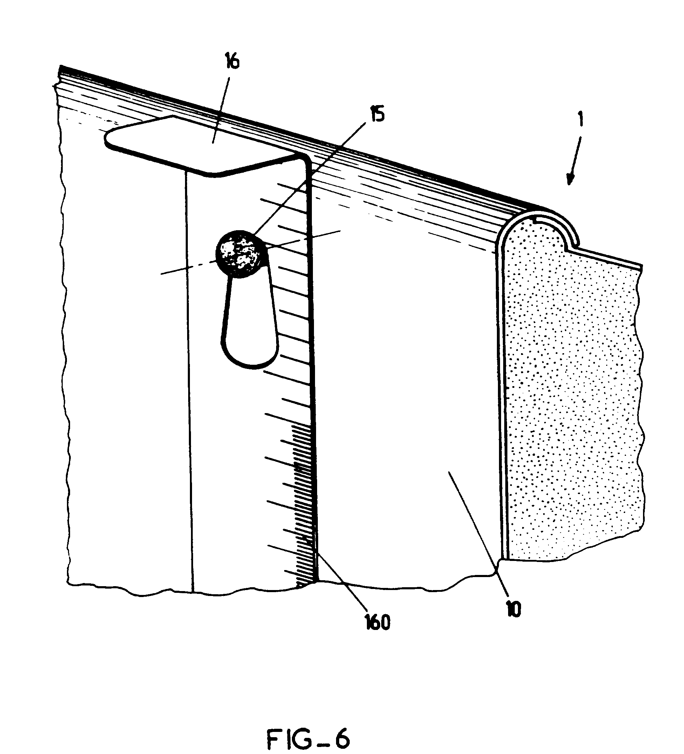

Comme représenté à la figure 6, une cuve (10) comporte sur une de ses parois verticales un téton d'accrochage (15) sur lequel vient se fixer une règle de jauge (16) pourvue de graduations millimétriques, par exemple, (160). Ce dispositif permet de façon simple de lire directement la hauteur de liquide contenue dans la cuve et de déterminer ainsi le volume du liquide contenu par celle-ci à l'aide d'un barème spécifique à cette cuve.

Toutefois ce dispositif présente l'inconvénient de ne pas permettre une lecture précise par l'observateur car cette lecture est liée à la trace laissée par le liquide sur la règle. D'autre part, comme une telle cuve peut être équipée d'un agitateur provoquant des mouvements de fluctuation ou de circulation du liquide dans celle-ci, une lecture directe peut être entachée d'erreurs dues aux fluctuations du liquide.

Chaque cuve doit donc être fournie avec un barème de jaugeage, une règle de jauge et une procédure de mise à niveau effectuée lors de son installation. Ceci nécessite également que soit effectué le jaugeage en usine de chaque cuve fabriquée avec édition d'un barème caractéristique. Ainsi, par exemple, pour une cuve de stockage du lait, lors de la collecte du lait, le chauffeur chargé de la collecte effectue un relevé de la hauteur du lait présent dans la cuve, recherche sur le barème la quantité de lait correspondante, note cette quantité sur un relevé journalier, transmet pour traitement en fin de journée les quantités prélevées chez chaque producteur. Pour que le chauffeur effectue une mesure correcte, il faut que le lait soit exempt de mousse, que la surface du liquide soit stabilisée, ce qui nécessite au moins une attente de cinq minutes après l'arrêt de l'agitateur de la cuve et même dans ces conditions, la précision de la lecture sur une régle reste limitée à 1 mm.

L'invention peut être utilisée dans une cuve (1) comportant deux évaporateurs (11, 12) situés à des niveaux différents, ces évaporateurs (11, 12) étant associé chacun à un compresseur (91, 92) injectant un liquide réfrigérant vers l'évaporateur correspondant. Sur la figure 1 on peut voir que l'évaporateur supérieur (11) se situe au-dessus du niveau du liquide matérialisé par un flotteur (4) maintenu par une tige (21) en vis-à-vis d'un émetteur récepteur (2) de détermination de niveau. La tige de guidage comporte une graduation référencée à partir du point d'accrochage pour permettre une lecture visuelle de hauteur du liquide. Au fond de la cuve est installé un agitateur (13). L'agitateur (13) et les compresseurs (91, 92) sont commandés par une électronique (6) de commande de processus qui est elle-même reliée à une unité centrale (5). Cette unité centrale (5) reçoit du capteur émetteur récepteur (2) par la liaison (22) un signal représentatif du niveau (h) du liquide dans la cuve. Cette information peut permettre de ne commander le compresseur (92) que lorsque le niveau assure l'immersion du second évaporateur (12). L'information correspondant à ce signal peut être affichée par un afficheur (7). Enfin, l'unité centrale (5) est également reliée à un dispositif électronique (8) de transformation des signaux provenant d'autres capteurs, tels que par exemple, un capteur de mesure de la température du liquide de la cuve et un capteur de mesure de la température extérieure à la cuve. Ces derniers capteurs peuvent être utilisés pour déterminer, par exemple, la mise en fonctionnement du ou des compresseurs (91, 92) et également de l'agitateur (13).

Une autre variante de réalisation de l'invention est représentée à la figure 1bis où l'unité centrale (5) est dissociée de l'unité de commande de process (6) qui n'est plus sous le contrôle de l'unité centrale (5).

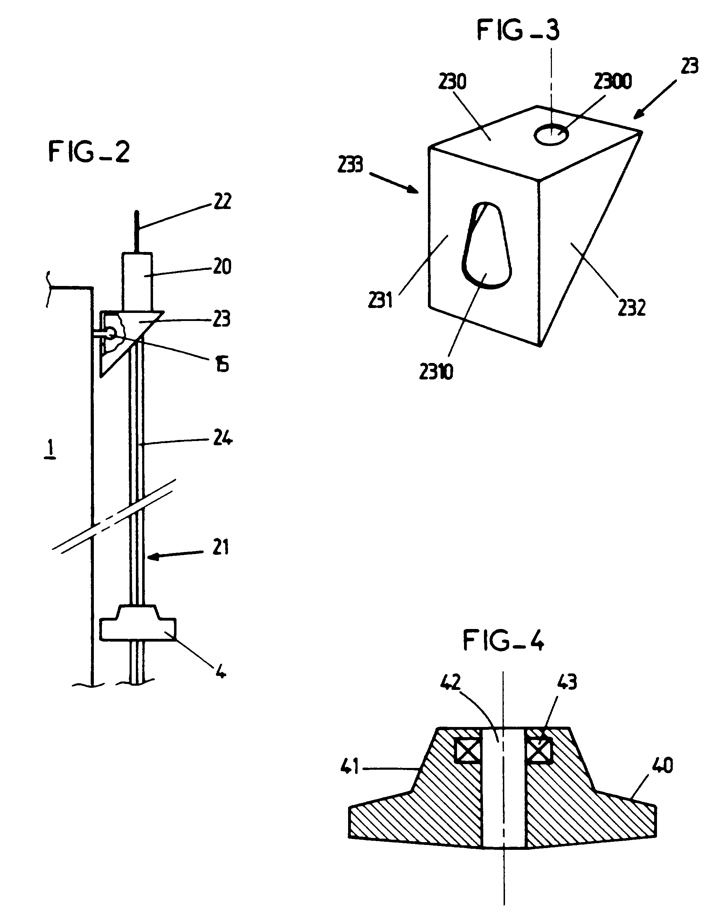

Le dispositif de mesure de la hauteur de liquide est représenté à la figure 2 et le dispositif d'accrochage à la figure 3. Un capteur (20) comportant un émetteur récepteur est monté sur un dispositif d'accrochage (23) accroché sur le téton (15) de la paroi de la cuve (1).

Le dispositif d'accrochage (23) est constitué par une pièce en forme d'équerre comportant une surface horizontale (230) et une surface verticale (231) dans laquelle, ont été réalisés, pour la surface (230) un trou (2300) de passage et de fixation du capteur (20) et, pour la surface verticale (231), un trou oblong (2310) d'accrochage sur le téton (15). Cette équerre (230, 231) est renforcée par des flancs latéraux triangulaires (232, 233) soudés aux surfaces horizontale (230) et verticale (231), de façon à la rendre indéformable. Le dispositif de mesure est constitué également par une tige creuse (21) à l'intérieur de laquelle circule une tige concentrique (24) conductrice.

Un flotteur (4) est constitué, comme représenté à la figure 4, d'un élément flottant ayant une base élargie (40) et se prolongeant à la partie supérieure par une forme tronconique (41). Ce flotteur comporte un puits central (42) qui lui permet de coulisser le long de la tige creuse (21). Dans la masse de la partie tronconique (41) du flotteur sont noyés plusieurs aimants permanents (43). Le dispositif électronique du capteur (20) comporte un émetteur relié à la tige centrale conductrice (24) qui permet d'émettre sur cette tige une impulsion électrique qui va développer dans le conducteur (24) un champ magnétique. Ce champ magnétique va se propager le long de la tige et lorsqu'il va arriver au voisinage des aimants permanents du flotteur va subir, par effet magnétostrictif, l'influence des aimants permanents (43). Une onde de torsion va ainsi se développer, par effet mangnétostrictif, et se propager dans les deux directions, l'une vers l'extrémité de la tige, l'autre en direction de l'élément capteur (20). La tige centrale (24) présente une zone, d'environ cinquante millimètres, à son extrémité éloignée de l'élément capteur, remplie de matériau évitant la réflexion de l'onde de torsion. Un dispositif récepteur constitué par un capteur de torsion détecte l'arrivée de l'onde de torsion et permet ainsi de déterminer le temps qui s'est écoulé entre l'envoi de l'onde et la réception de l'onde de torsion. Un circuit de traitement électronique implanté dans le capteur (20) permet de délivrer sur le conducteur (22) un signal électrique représentatif du niveau (h) du flotteur dans la cuve. Ce signal envoyé vers l'unité centrale permet à cette dernière de déterminer grâce à une table (50) contenue dans une mémoire de cette unité centrale (5), le volume de liquide correspondant à ce niveau. L'unité centrale (5) échantillonne en permanence le signal représentatif du niveau du liquide dans la cuve. Lorsqu'un certain nombre de valeurs reçues sont identiques dans un intervalle de temps déterminé, l'unité centrale (5) valide cette valeur. Ceci permet à l'unité centrale (5) de connaître la stabilisation de la surface du liquide lorsque, par exemple, 500 mesures identiques, à raison de 10 mesures par seconde, ont été enregistrées. Le niveau (h) peut être également calculé par l'unité centrale (5) par toute formule appliquée aux valeurs mesurées, telle par exemple une moyenne, évitant dans ce cas d'attendre la stabilisation du liquide. La connaissance du niveau (h) permet également de commander la mise en fonctionnement ou non d'un ou plusieurs évaporateurs (11, 12) du système de refroidissement, de façon que seuls les évaporateurs immergés fonctionnent. Enfin, les autres valeurs déterminées par les capteurs (8), telle que par exemple la température interne du liquide, permettent également de mettre en oeuvre le ou les compresseurs (91, 92) et agitateur (13) pour les cycles de réfrigération. Pendant les phases de conservation, les agitateurs sont commandés cycliquement pour homogénéiser la température du liquide. La connaissance permanente du niveau dans la cuve constitue donc une donnée importante susceptible d'améliorer le fonctionnement des processus de réfrigération et de lavage, de commander les groupes compresseurs en fonction du niveau, de contrôler l'agitation, et les quantités de solution de lavage et de déclencher des alarmes.

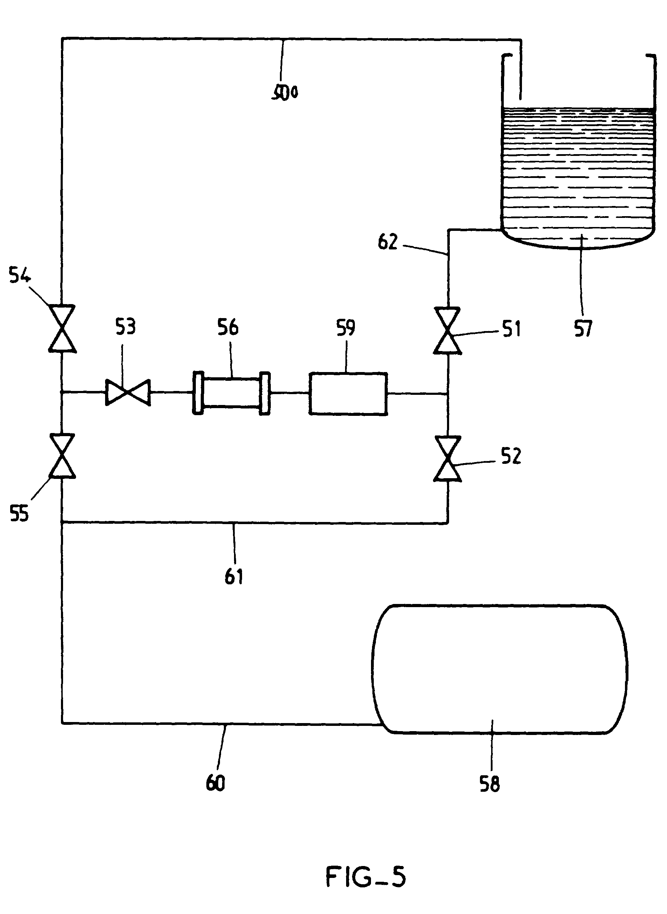

La détermination de la table de correspondance (50) s'effectue en usine à l'aide du dispositif représenté à la figure 5. Une cuve à jauger (58) est reliée par une canalisation (60) à une électrovanne (55) dont l'autre extrémité est reliée, d'une part par une électrovanne (54) et une canalisation (500) à un circuit de remplissage d'une cuve de stockage d'eau (57) et, d'autre part, par une électrovanne (53), à une turbine (56) de comptage du volume et une pompe (59). Cette pompe (59) reçoit, d'une part par une électrovanne (51) reliée par une canalisation (62) à la cuve de stockage (57) l'eau de remplissage de la cuve, d'autre part, par une électrovanne (52), reliée par une canalisation (61) à la canalisation (60) l'eau de la cuve (58) à jauger. Ainsi avec le dispositif représenté à la figure 5, lorsque les vannes (51, 53, 55) sont ouvertes et les vannes (52, 54) sont fermées, la cuve à jauger (58) est remplie et on mesure le volume minimal et le volume maximal tout en déterminant les hauteurs correspondant aux seuils bas et haut. Une fois la cuve remplie, on procède à sa vidange en fermant les vannes (51, 55) et en ouvrant les vannes (52, 54). Lors de la vidange, le liquide prélevé dans la cuve (58) circule par la pompe (59), la turbine (56) est rejeté par la canalisation de trop plein (500) dans la cuve de stockage d'eau (57). La turbine (56) permet, par une électronique reliée à celle-ci, de déterminer le volume d'eau extrait de la cuve, et ainsi d'associer à chaque mesure de hauteur effectuée à intervalles réguliers, soit par lecture directe sur une règle, soit par lecture électronique et automatisée par un des dispositifs représentés et installés dans la cuve, d'établir une correspondance entre le volume de la cuve et la valeur fournie par le dispositif de mesure de la hauteur.

La simplicité du dispositif de fixation permet également d'installer le dispositif automatique de détermination de volume sur les cuves existantes sans entraîner une désinstallation des cuves. La détermination de la table de correspondance peut dans ce cas s'effectuer sur place, soit par intégration dans la mémoire du barème existant, soit par jaugeage de cette même cuve avec des jauges étalon et intégration des résultats dans la mémoire.

Il est bien évident que le dispositif de mesure de hauteur du type magnétostricif envisagé n'est pas le seul possible installable sur une cuve et on peut tout aussi bien envisager de remplacer ce système par un système comportant à la place d'aimants permanents (43) une cible qui permette la réflexion d'ondes optiques ou électroniques à ultrasons ou hyperfréquences. Ces ondes sont associées avec les capteurs correspondant au niveau du dispositif électronique (20). En tout état de cause, le flotteur (4) doit rester guidé par une tige (21) pour le maintenir dans l'alignement du dispositif émetteur optique ou à fréquence.

## Revendications

1. Dispositif de mesure du niveau du liquide dans une cuve, comprenant des moyens de mesure de la distance entre un flotteur (4) et un émetteur-récepteur (20), et un élément de guidage (21) du flotteur (4) destiné à le maintenir dans l'alignement de l'émetteur-récepteur (20), caractérisé en ce qu'un téton de fixation (15) est fixé sur la paroi de la cuve, le téton servant de référence de niveau pour le barêmage, et le dispositif comprend un moyen d'accrochage amovible (23) de l'émetteur-récepteur (20) au téton de fixation (15) et l'élément de guidage comporte une graduation référencée à partir du point d'accrochage pour permettre une lecture visuelle du niveau du liquide.

2. Dispositif selon la revendication 1, caractérisé en ce que le moyen d'accrochage de l'émetteur-récepteur (2) comprend un flanc (231) comportant un orifice oblong (2310) d'accrochage sur le téton de fixation (15), et l'émetteur-récepteur (2) est relié à une unité centrale (5).

3. Dispositif selon la revendication 1 ou 2, caractérisé en ce que le moyen d'accrochage (23) est constitué d'un flanc en équerre à faces planes (230, 231), une des faces (231) de l'équerre comportant un orifice oblong (2310) d'accrochage sur le téton de fixation et la face perpendiculaire (230) à la face plane (231) un trou (2300) de passage de l'élément de guidage (21), et d'un moyen de fixation de l'émetteur récepteur.

4. Dispositif selon la revendication 3, caractérisé par des entretoisds (232, 233) de renfort s'étendant d'une face (230) à l'autre face (231).

5. Dispositif selon la revendication 2, caractérisé en ce que le moyen d'accrochage (23) est une pièce moulée.

6. Dispositif selon l'une des revendications 1 à 5, caractérisé en ce que le flotteur (4) comporte une cible permettant la réflexion d'un faisceau d'onde incidente émise par le dispositif émetteur (20) pour être détectée par un récepteur et de déterminer ensuite le temps mis par le faisceau incident pour se réfléchir.

7. Dispositif selon la revendication 6, caractérisé en ce que l'onde est optique et le capteur est optique.

8. Dispositif selon la revendication 6, caractérisé en ce que l'onde est ultrasonore et le capteur est un capteur à ultrasons.

9. Dispositif selon l'une des revendications 1 à 5, caractérisé en ce que le flotteur (4) comporte noyés dans la masse des aimants permanents (43), l'élément de guidage (21) est constitué d'un tube creux (21) à l'intérieur duquel se trouve une tige coaxiale (24) conductrice permettant de véhiculer une onde électrique qui, au passage devant les aimants (43), provoque par magnétostriction une onde de torsion se propageant dans les deux directions le long de la tige (21) pour être détectée au niveau du capteur par un capteur de torsion pour déterminer ensuite le temps mis par l'onde pour revenir, l'onde de torsion en direction de l'extrémité opposée à l'émetteur étant amortie pour éviter des réflexions parasites.

10. Dispositif selon l'une des revendications 6 à 9, caractérisé en ce que le flotteur (4) est tubulaire et à une base (40) plus large qui se prolonge par une forme tronconique (41).

11. Utilisation d'un dispositif selon l'une des revendications 2 à 10, caractérisé en ce qu'il consiste à faire effectuer par l'unité centrale plusieurs mesures se succédant dans le temps en retenant pour valeur de niveau celle qui correspond, soit à plusieurs valeurs successives identiques, soit à une valeur moyenne calculée.

## Patentansprüche

1. Vorrichtung zur Messung des Flüssigkeitspegels in einem Behälter, die Mittel zur Abstandsmessung zwischen einem Schwimmer (4) und einem Sende- und Empfangsgerät (20), sowie ein Führungselement (21) für den Schwimmer (4) enthält, um diesen in der Fluchtlinie des Sende- und Empfangsgeräts (20) zu halten, dadurch gekennzeichnet, daß an der Wand des Behälters ein Befestigungszapfen (15) angebracht ist, der als Bezugspegel für die Eichung dient, die Vorrichtung ein abnehmbares Halterungselement (23) für das Sende- und Empfangsgerät (20) hat, und das Führungselement eine auf den Befestigungspunkt bezogene Skala zur visuellen Bestimmung des Flüssigkeitspegels aufweist.

2. Vorrichtung nach Anspruch 1, dadurch gekennzeichnet, daß das Halterungselement des Sende- und Empfangsgeräts (2) eine Seitenwand (231) mit einer länglichen Öffnung (2310) zum Anhängen am Befestigungszapfen (15) hat und das Sende- und Empfangsgerät (2) an eine Zentraleinheit (5) angeschlossen ist.

3. Vorrichtung nach Anspruch 1 oder 2, dadurch gekennzeichnet, daß das Halterungselement (23) aus einem durch ebene Seitenwände (230,231) gebildeten Winkel besteht, dessen eine Seitenwand (231) eine längliche Öffnung (2310) zum Anhängen am Befestigungszapfen (15) und dessen zu der ebenen Seitenwand (231) rechtwinklig verlaufende Seitenwand (230) ein Durchgangsloch (2300) für das Führungselement (21) aufweist, und ein Befestigungsmittel für das Sende- und Empfangsgerät besitzt.

4. Vorrichtung nach einem der Ansprüche 1 bis 3, gekennzeichnet durch Versteifungswände (232,233), die sich von einer Seitenwand (230) zur anderen Seitenwand (231) erstrecken.

5. Vorrichtung nach einem der Ansprüche 1 bis 4, dadurch gekennzeichnet, daß das Halterungselement (23) ein Formteil ist.

6. Vorrichtung nach einem der Ansprüche 1 bis 5, dadurch gekennzeichnet, daß der Schwimmer (4) eine Auftreffplatte aufweist, welche die Reflexion eines von dem Sendegerät (20) ausgesandten Wellenstrahls erlaubt, der von einem Empfänger aufgenommen und zur Bestimmung der für die Aussendung und Reflexion des Strahls benötigten Zeit herangezogen wird.

7. Vorrichtung nach Anspruch 6, dadurch gekennzeichnet, daß eine optische Welle und ein optischer Empfänger vorgesehen ist.

8. Vorrichtung nach Anspruch 6, dadurch gekennzeichnet, daß eine Ultraschallwelle und ein Ultraschallempfänger vorgesehen ist.

9. Vorrichtung nach einem der Ansprüche 1 bis 5, dadurch gekennzeichnet, daß der Schwimmer (4) in seinem Körper Vertiefungen für Dauermagneten (43) aufweist, das Führungselement (21) aus einem hohlen Rohr (21) besteht, in dessen Innerem sich eine koaxiale Leitstange (24) befindet, die die Übertragung einer elektrischen Welle erlaubt, welche beim Passieren der Magnete (43) durch Magnetostriktion eine Torsionswelle hervorruft, die sich ihrerseits in beide Richtungen entlang des Rohrs (21) fortbewegt, um in Höhe des Aufnehmers von einem Torsionsaufnehmer zum Zwecke der Bestimmung der Zeit zwischen Wellenaussendung und Rückkehr aufgenommen zu werden, wobei die Torsionswelle an dem dem Sender gegenüberliegendem Ende gedämpft ist, um Störreflexionen zu vermeiden.

10. Vorrichtung nach einem der Ansprüche 6 bis 9, dadurch gekennzeichnet, daß der Schwimmer rohrförmig ausgebildet ist und sich von einer Basis (40) größeren Durchmessers in Form eines Kegelstumpfes (41) verlängert.

11. Verfahren zur Verwendung einer Vorrichtung nach einem der Ansprüche 2 bis 10, dadurch gekennzeichnet, daß in der Zentraleinheit mehrere zeitlich aufeinander folgende Messungen durchgeführt werden und bei denen ein dem Pegelstand entsprechender Wert, entweder in Form von mehreren aufeinander folgenden identischen Werten oder einem berechneten Mittelwert, zurückgegeben wird.

## Claims

1. Device for measuring the level of liquid in a tank, comprising means for measuring the distance between a float (4) and a transceiver (20), and a guide element (21) for the float (4) intended to keep it in alignment with the transceiver (20), characterised in that a fixing stud (15) is secured to the wall of the tank, the stud serving as a reference level for the measurement, and the device comprises a device (23) for removably attaching the transceiver (20) to the fixing stud (15) and the guide element comprises a reference scale starting from the attachment point to allow the level of liquid to be read off visually.

2. Device according to claim 1, characterised in that the device for attaching the transceiver (2) comprises a flank (231) having an oblong orifice (2310) for attachment to the fixing stud (15), and the transceiver (2) is connected to a central unit (5).

3. Device according to claim 1 or 2, characterised in that the attachment device (23) consists of a right-angled flank with planar surfaces (230, 231), one surface (231) of the right-angled member comprising an oblong orifice (2310) for attachment to the fixing stud and the surface perpendicular (230) to the planar surface (231) comprising a hole (2300) for the guide element (21) to pass through, and means for securing the transceiver.

4. Device according to claim 3, characterised by reinforcing struts (232, 233) extending from one surface (230) to the other surface (231).

5. Device according to claim 2, characterised in that the attachment device (23) is a moulded part.

6. Device according to one of claims 1 to 5, characterised in that the float (4) has a target for reflecting an incident wave beam emitted by the emitter (20) to be detected by a receiver and then determining the time taken for the incident beam to be reflected.

7. Device according to claim 6, characterised in that the wave is optical and the sensor is optical.

8. Device according to claim 6, characterised in that the wave is an ultrasound wave and the sensor is an ultrasonic sensor.

9. Device according to one of claims 1 to 5, characterised in that the float (4) has permanent magnets (43) embedded in its mass, the guide element (21) consists of a hollow tube (21) inside which is a coaxial conducting rod (24) making it possible to carry an electric wave which, on passing the magnets (43), causes a torsion wave by magnetostriction, said torsion wave being propagated in both directions along the rod (21), so as to be detected at the sensor by a torsion sensor in order subsequently to determine the time taken by the wave to return, the torsion wave towards the opposite end from the emitter being muffled in order to prevent parasitic reflections.

10. Device according to one of claims 6 to 9, characterised in that the float (4) is tubular and has a wider base (40) extending in a frustum shape (41).

11. Use of a device according to one of claims 2 to 10, characterised in that it consists in using the central unit to carry out a plurality of measurements succeeding one another in time and taking as the measurement of the level the one which corresponds either to a plurality of successive identical values or to a calculated mean value.
